Europäisches Patentamt

European Patent Office

Office européen des brevets

(11) Publication number: **0 124 955**
**B1**

## EUROPEAN PATENT SPECIFICATION

(51) Int. Cl.⁴: **C 08 L 101/00** // (C08L101/00, 23:02, 27:18)

(45) Date of publication of patent specification: **20.01.88**

(21) Application number: **84300847.5**

(22) Date of filing: **10.02.84**

(54) Polyolefin lubricant systems and polymer composites containing such lubricants.

(30) Priority: **14.02.83 US 465968**

(43) Date of publication of application:
**14.11.84 Bulletin 84/46**

(45) Publication of the grant of the patent:
**20.01.88 Bulletin 88/03**

(84) Designated Contracting States:
**DE FR GB IT NL SE**

(56) References cited:
**US-A-3 458 596**
**US-A-4 001 124**
**US-A-4 159 286**

**CHEMICAL ABSTRACTS OF JAPAN, vol. 79, no. 2, 16th July 1973, page 49, no. 6231d, Columbus, Ohio, US;**

**CHEMICAL ABSTRACTS, vol. 80, no. 4, 28th January 1974, page 52, no. 15874p, Columbus, Ohio, US**

(73) Proprietor: **BEATRICE FOODS CO.**
**Two North LaSalle Street**
**Chicago, Illinois 60602 (US)**

(72) Inventor: **Crosby, Jane M.**
**5830 Tupelo Turn**
**Wilminton Delaware (US)**
Inventor: **Theberge, John E.**
**498 Evergreen Road**
**King of Prussia Pennsylvania (US)**

(74) Representative: **Harvey, David Gareth et al**
**Graham Watt & Co. Riverhead**
**Sevenoaks Kent TN13 2BN (GB)**

(56) References cited:
**CHEMICAL ABSTRACTS, vol. 97, no. 26, 27th December 1982, page 54, no. 217424d, Columbus, Ohio, US**

**CHEMICAL ABSTRACTS, vol. 95, no. 16, 19th October 1981, page 49, no. 134012a, Columbus, Ohio, US**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the invention

The present invention relates to polyolefin lubricant systems and polymer composites containing such polyolefin lubricants. More particularly, the invention is directed to the use of polyolefin or polyolefin/polytetrafluoroethylene blends as lubricants in polymer matrices to provide greatly improved friction and wear properties in the polymer composites.

It is known that various solid and liquid lubricants can be dispersed in a polymeric matrix by melt mixing for the purpose of reducing the coefficient of friction, increasing the wear resistance and increasing the limiting pressure velocity (LPV) of the resulting polymer composite. For example, US—A—2 855 377 teaches that the incorporation of molybdenum disulfide lubricant particles in polyamides results in a lowering of the coefficient of friction. Similarly, US—A—3 287 288 teaches that the addition of degraded polytetrafluoroethylene particles to a resinous binder, including a variety of thermoplastic polymers, thermosetting polymers and rubbers, reduces the surface friction of the parent plastic material which may be used to form bearings or similar items.

U.S. Patent No. 3,458,596 teaches that the addition of discrete, identifiable particles of polyolefin having a molecular weight greater than 500,000 to polyamides and polyacetals results in improved wear resistance and lowered coefficients of friction only if discrete particle phases are preserved during processing (melt mixing).

From *Chemical Abstracts 79*, 6231 d, a transparent moulding composition is known, which consists of polystyrene admixed with 3—10% of a low molecular weight polybutene as a moulding lubricant. The polybutene had a degree of polymerization of 3—8. There is no disclosure that the moulding composition contains other constituents.

From *Chemical Abstracts 97*, 217424 d, impact-resistant styrene polymers are known which contain ethylenic wax lubricants. Specifically disclosed is a blend of polystyrene and butadiene-α-methylstyrene copolymer rubber, containing a purified polyethylene wax prepared from a low pressure polymerized ethylene having a molecular weight of 500—8000. The blend contained 62% polystyrene and 4.6% of said polyethylene.

From *Chemical Abstracts 95*, 134012 a, electric current collectors are known comprising a metal (e.g. copper) mesh embedded in a polymeric blend. More specifically, the polymeric blend comprised 50% polyester, 15% polyethylene wax, 22% PTFE and 13% graphite, and in combination with the mesh provided a low friction sliding current collector.

US—A—4,001,124 discloses a plastics bearing material comprised of a plastics matrix, e.g. nylon, containing about 5% polyethylene having a molecular weight in the range 800,000 to 8,000,000 and 10% PTFE. Polyethylene in this range is specified since the patent calls for the polyethylene to be dispersed in the matrix as discrete particles.

To our knowledge, polyolefins having a molecular weight of about 50,000 to about 500,000 alone, or blended with finely divided PTFE and in which the polyolefins do not remain as discrete particles after processing have not previously been recognized as effective lubricants for polymer matrices or as providing improved friction and wear properties to polymer composites.

According to the present invention, there is provided the use of a composition for providing desirable friction and wear properties to a polymer matrix material, said composition comprising a blend of about 2 to 98 weight percent polyolefin having an average molecular weight of about 50,000 to about 500,000, and about 98 to 2 weight percent finely divided polytetrafluoroethylene. This composition acts as an excellent lubricant providing desirable friction and wear properties to polymer matrix materials.

In addition, it has been found that suitable polyolefins alone or in admixture with PTFE, when incorporated into polymer matrix materials such that the polyolefin does not remain as discrete, identifiable particles after melt mixing with the polymer matrix, provides desirable friction and wear properties to the resulting polymer composite. The polyolefin or polyolefin/polytetrafluoroethylene blend lubricants of the present invention are added to the polymer matrix in an amount of about 1 to 30 weight percent of the polymer composite. The polymer matrix may comprise any of a wide variety of thermoplastic polymers, thermosetting polymers, rubbers, or elastomers. The lubricant systems of the present invention preferably comprise polyethylene having a molecular weight of about 50,000 to about 500,000.

The invention also provides, therefore a polymer composite having desirable friction and wear properties comprising a polymer matrix and about 1 to 30 weight percent, based on the weight of the composite, of a lubricant mixed with said polymer matrix, said lubricant comprising a polyolefin having an average molecular weight of about 50,000 to 500,000 and which does not remain as discrete, identifiable particles after melt mixing with the polymer matrix; said lubricant can further include finely divided PTFE as will be apparent from the preceding paragraph.

The description which follows is given by way of non-limitative example of the invention.

In contradistinction to US—A—3,458,596, we have found that it is not necessary that an introduced polymeric lubricant filler remain in discrete phases throughout the polymer matrix in order to obtain substantial improvements in friction and wear properties. While it is true that high molecular weight polyethylene (i.e., polyethylene having a molecular weight greater than about 500,000) may remain as

2

discrete particles after processing in a polyamide matrix, we have found that lower molecular weight polyolefins also provide substantial improvements in friction and wear properties, even though the lubricant no longer exists as discrete particles in the polymer matrix when the composites are extruded and molded well above the melting point of the polyolefin lubricant. Further, we have observed synergistic lubrication effects from blends of polytetrafluoroethylene and polyolefins of various molecular weights. These lubricant blends were found to be useful in a broad range of polymers and polymer composites.

The polyolefins which are useful as lubricants according to the present invention include, for example, polyethylene, polypropylene and polyolefin copolymers, such as ethylene-propylene copolymer. The polyolefin has a molecular weight in the range of about 50,000 up to 500,000, i.e., low molecular weight polyolefins. In any event, as indicated above, the polyolefins selected should not be ones that will remain as discrete, identifiable particles after melt mixing with the polymer matrix or processing of the polymer composite.

The polyethylene may be added to the polymer matrix in any suitable manner which will be evident to those of ordinary skill in the art. For example, the polyolefin may be in the form of a powder or pellets. In the case where the polymer matrix is also a polyolefin, a polyolefin lubricant will be selected which is of a different type than the polymer matrix. For example, if the polymer matrix is polypropylene, the lubricant may be polyethylene.

Where the lubricant of the present invention comprises a blend of polyolefin with polytetrafluoroethylene, the polyolefin should comprise about 2 to 98 weight percent of the blend and the polytetrafluoroethylene should comprise about 98 to 2 weight percent of the blend. Preferably, the polyolefin should be in the range of about 20 to 80 weight percent of the blend, and the polytetrafluoroethylene should comprise about 80 to 20 weight percent of the blend.

The polytetrafluoroethylene used in the lubricant blend should be in the form of a finely divided powder having a molecular weight of less than 4,000,000. Normally, polytetrafluoroethylene has a molecular weight in the range of about 4,000,000 to 6,000,000. Therefore, the polytetrafluoroethylene can be degraded or irradiated in order to obtain a fine powder from high molecular weight polytetrafluoroethylene. Low molecular weight polytetrafluoroethylene resins are also suitable. The polyolefin and polytetrafluoroethylene may be either blended prior to mixing with the polymer matrix or may be added separately to the polymer matrix and thoroughly blended with the polymer matrix.

The lubricant systems of the present invention may be added to polymer matrices in an amount of about 1 to 30 weight percent and preferably about 15 to 20 weight percent of the total polymer composite. Since polyolefins are much less expensive than polytetrafluoroethylene, it is desirable to replace as much of the polytetrafluoroethylene with polyolefin as possible.

The lubricant systems of the present invention may be used with a wide variety of polymer matrices, including thermoplastic polymers, thermosetting polymers, rubbers, and elastomers. Examples of such polymer matrices include polyamides, such as polyhexamethylene adipamide, polyhexamethylene sebacamide, polycaprolactam, polycapryllactam, polyhexamethylene dodecanamide, polyhexamethylene azeleamide, polyundecanoamide, polylauryllactam, polyamide modified with carboxylic acids and olefin copolymer and blends of the above; polyesters, including polyalkylene terephthalates, such as polyethylene terephthalate and polybutylene terephthalate, polyalkylene terephthalate copolymers, such as the segmented polyether-ester copolymer derived from the condensation of dimethyl terephthalate, polytetramethylene ether glycol, 1,4-butanediol and blends of the above polyesters, polyoxymethylene, including homopolymers or copolymers thereof, polyphenylene sulfide; aromatic carbonate polymers, in particular the polycarbonate resin based on Bisphenol-A and phosgene; styrenic polymers and copolymers including polystyrene, poly-α-methyl-styrene, acrylonitrilebutadiene-styrene, styrene-butadiene-styrene, acrylonitrilestyrene, styrene-maleic anhydride, styrenemaleic anhydridemethacrylate, and styrenic alloys with poly-2,6-dimethyl-1,4-phenylene ether; polyolefins, such as polyethylenes, polypropylenes and polyolefin copolymers such as ethylenepropylene copolymers; polyurethane, such as linear thermoplastic polyurethane; thermosetting polyesters; thermosetting polyimides; phenolic resins; epoxy resins; urea resins; melamine resins; and furan resins etc.

In addition to the lubricant systems of the present invention, the polymer composites may also include other additives, including fillers, such as mica, wollastonite, talc, calcium carbonate, etc; reinforcing agents, such as glass fibers, graphite fibers, aramid fibers, etc; and additional lubricants, such as molybdenum disulfide, graphite powder, silicone fluid, etc. Other conventional additives for polymer composites will be readily apparent to those of ordinary skill in the art.

The lubricated composites of the present invention may be used in the same types of applications as other lubricated polymer composites of the prior art, including numerous situations where the surface of the composite bears against another surface, including plastic-plastic surface contact, plastic-metal surface contact, etc. It has been found according to the present invention that the lubricated composites of the present invention have greatly improved friction and wear properties in such situations, including lower coefficients of friction, increased surface wear resistance and increased limiting pressure velocity (LPV). Moreover, while the above description is primarily directed to the concept of using the lubricant systems of the present invention as an internal lubricant for the polymer matrix, the lubricating systems of the present invention may also be used as lubricants for impregnating metal surfaces, for example, in much the same

3

way as polytetrafluoroethylene powder is often used to impregnate metal surfaces for lubricating purposes.

The present invention will now be illustrated in more detail by reference to the following specific, non-limiting examples. Unless otherwise indicated, all percentages are by weight.

Example 1

Polycarbonate composites were prepared by melt mixing 15% of a polytetrafluoroethylene lubricant powder (LNP TL-140) and a blend of 8% polytetrafluoroethylene lubricant (LNP TL-140) with 7% of a low density polyethylene powder (USI Microthene MN703—06). In the case of the blend the polytetrafluoroethylene and polyethylene polymers were cryogenically milled and blended together prior to melt-mixing. Each mixture of polycarbonate resin and lubricant was fed to an extruder, and the extrudate was comminuted into pellets. The pellets were injection molded into the appropriate wear specimen. The specimen is a 1'' radius (2.54 cm) disc with a thickness of about 1/8'' (3 mm) and having an annular ridge on one surface.

The friction and wear testing of these specimens was conducted on a modified drill press in accordance with the "thrust washer" test method (LNP #1). Wear factors (volumetric weight loss measured in units of $10^{-10}$ in$^3$ min/ft.lb. hr=$1.18 \times 10^{-8}$cm$^2$min/m.Kg.hr) for each compound were based on equilibrium wear rates independent on break-in wear. The wear test is conducted at 40 psi, 50 ft/min (2.76 bar, 15.2 m/min) at room temperature and against a mating metal surface of cold-rolled carbon steel. After thermal equilibrium occurs, the frictional torque generated is measured with a torque arm mounted on an anti-friction bearing on the lower sample holder in the "thrust washer" test apparatus. The results of the friction and wear testing indicate that a substantial improvement in wear resistance and a reduced coefficient of friction can be achieved with the addition of polytetrafluoroethylene lubricant. However, the blend of 7% polyethylene and 8% polytetrafluoroethylene lubricant results in a still greater improvement in wear resistance and reduction in coefficient of friction as illustrated in the table below:

| | Wear factor $10^{-10} \dfrac{\text{in}^3\text{min}}{\text{ft.lb.hr.}}$ [cm$^3$min/m.Kg.hr] | Coefficient of friction | |
| --- | --- | --- | --- |
| | | $\mu_S$ | $\mu_D$ |
| Polycarbonate Resin | 2500 [$2.96 \times 10^{-5}$] | 0.31 | 0.38 |
| Polycarbonate with 15% Polytetrafluoroethylene Lubricant | 75 [$8.88 \times 10^{-7}$] | 0.09 | 0.15 |
| Polycarbonate with 8% Polytetrafluoroethylene and 7% Polyethylene Lubricant | 43 [$5.09 \times 10^{-7}$] | 0.06 | 0.11 |

Example 2

Styrene maleic anhydride copolymer composites were prepared by melt mixing the resin (Arco Dylark 700), glass fiber reinforcement (PPG 3130), and lubricant in an extruder. Specimens were prepared and tested as in Example 1. The polytetrafluoroethylene lubricant was LNP TL-115A and the polyethylene was ARCO Dylan 2010F cryogenically milled and blended prior to melt-mixing. The addition of polytetrafluoroethylene lubricant to styrene-maleic anhydride copolymer results in a significant improvement in user resistance and reduction in coefficient of friction. A greater improvement in wear resistance and reduction in coefficient of friction is achieved with the lubricant blend of polytetrafluoroethylene and polyethylene. A significant reduction in mating metal surface wear was also noted with the lubricant blend as illustrated below:

| | Wear factor $\frac{in^3 min}{10^{-10} \frac{}{ft.lb.hr}}$ | Coefficient of friction | | Wear factor of mating steel surface $\frac{in^3 min}{10^{-10} \frac{}{ft.lb.hr}}$ |
|---|---|---|---|---|
| | | $\mu_S$ | $\mu_D$ | |
| Styrene-Maleic Anhydride Copolymer Resin | 3000 $[3.55\times10^{-5}\frac{cm^2 min}{m.Kg.hr}]$ | 0.28 | 0.32 | — |
| Styrene-Maleic Anhydride Copolymer with 30% Glass Fiber Reinforcement and 15% Polytetrafluoroethylene Lubricant | 178 $[6.40\times10^{-6}\frac{cm^3 min}{m.Kg.hr}]$ | 0.20 | 0.17 | 24 $[2.84\times10^{-7}\frac{cm^3 min}{m.Kg.hr}]$ |
| Styrene-Maleic Anhydride Copolymer with 30% Glass Fiber Reinforcement and 3% Polytetrafluoroethylene and 12% Polyethylene | 65 $[7.70\times10^{-7}\frac{cm^3 min}{m.Kg.hr}]$ | 0.16 | 0.17 | 0.3 $[0.36\times10^{-8}\frac{cm^3 min}{m.Kg.hr}]$ |

Example 3

Polyacetal copolymers (Celanese Celcon M-90) yield low coefficients of friction and good wear resistance. The addition of 20% low density polyethylene (USI Microthene MN-703-6) results in a further decrease in coefficient of friction and improved wear resistance. The polyolefin lubricated composites offer lower coefficients of friction and greater wear resistance than 20% polytetrafluoroethylene (LNP TL-140) lubricated polyacetal copolymer composites, as illustrated by the following test results:

| | Wear factor $\frac{in^3 min}{10^{-10} \frac{}{ft.lb.hr.}}$ | Coefficient of friction | |
|---|---|---|---|
| | | $\mu_S$ | $\mu_D$ |
| Polyacetal Copolymer | 65 $[7.70\times10^{-7}\frac{cm^3 min}{m.Kg.hr}]$ | 0.14 | 0.21 |
| Polyacetal Copolymer with 20% Polytetrafluoroethylene Lubricant | 14 $[1.66\times10^{-7}\frac{cm^3 min}{m.Kg.hr}]$ | 0.07 | 0.15 |
| Polyacetal Copolymer with 20% Low Density Polyethylene Lubricant | 9.5 $[1.13\times10^{-7}\frac{cm^3 min}{m.Kg.hr}]$ | 0.07 | 0.11 |

Example 4

Polyphenylene sulfide composites were prepared by melt-mixing resin (Phillips Ryton P4), graphite fiber (Celanese C6), and lubricant in an extruder. Specimens were prepared and tested as in Example 1. The polytetrafluoroethylene lubricant was LNP TL-140 and the polyethylene lubricant was ARCO Dylan 2010F, cryogenically milled and blended prior to melt-mixing. The addition of graphite fiber results in significant improvements in wear resistance and reduced coefficient of friction. The addition of polytetrafluoroethylene lubricant in graphite fiber reinforced composites results in further improvements in wear resistance and reductions in the coefficient of friction. The composite prepared with graphite fiber and a 3% polytetrafluoroethylene/12% polyethylene lubricant blend demonstrates an additional significant improvement in wear resistance and reduction in the coefficient of friction, as shown in the table below:

5

| | Wear factor $\dfrac{in^3 min}{ft.lb.hr.}$ $10^{-10}$ $\left[\dfrac{cm^3 min}{m.Kg.hr}\right]$ | Coefficient of friction | |
|---|---|---|---|
| | | $\mu_S$ | $\mu_D$ |
| Polyphenylenesulfide Resin | 540 $[6.40 \times 10^{-6}]$ | 0.30 | 0.24 |
| Polyphenylenesulfide with 30% Carbon Fiber Reinforcement | 160 $[1.90 \times 10^{-6}]$ | 0.23 | 0.20 |
| Polyphenylenesulfide with 30% Graphite Fiber Reinforcement and 15% Polytetrafluoroethylene Lubricant | 75 $[8.88 \times 10^{-7}]$ | 0.16 | 0.15 |
| Polyphenylenesulfide with 30% Graphite Fiber Reinforcement, 3% Polytetrafluoroethylene and 12% Polyethylene | 12.5 $[1.48 \times 10^{-7}]$ | 0.18 | 0.17 |

Example 5

Polypropylene composites were prepared by melt-mixing resin (Hercules Profax PC072), glass fiber reinforcement (OCF 497) and lubricant (as in Example 2) in an extruder. Specimens were prepared and tested as in Example 1. The addition of lubricant blend to polypropylene results in a greater improvement in composite wear resistance and lower coefficients of friction than the polytetrafluoroethylene lubricant alone. A significant reduction in mating surface wear was also observed in the lubricant blend system, as shown below:

| | Wear factor $\dfrac{in^3 min}{ft.lb.hr}$ $10^{-10}$ | Coefficient of friction | | Wear factor of mating steel surface $\dfrac{in^3 min}{ft.lb.hr}$ $10^{-10}$ |
|---|---|---|---|---|
| | | $\mu_S$ | $\mu_D$ | |
| Chemically Coupled Polypropylene Homopolymer with 30% Glass Fiber Reinforcement and 15% Polytetrafluoroethylene Lubricant | 178 $[2.11 \times 10^{-6}\dfrac{cm^3 min}{m.Kg.hr}]$ | 0.20 | 0.17 | 24 $[2.84 \times 10^{-7}\dfrac{cm^3 min}{m.Kg.hr}]$ |
| Chemically coupled Polypropylene Homopolymer with 30% Glass Fiber Reinforcement and 3% Polytetrafluoroethylene and 12% Polyethylene Lubricant | 65 $[7.70 \times 10^{-7}\dfrac{cm^3 min}{m.Kg.hr}]$ | 0.16 | 0.17 | 0.07 $[8.29 \times 10^{-10}\dfrac{cm^3 min}{m.Kg.hr}]$ |

Example 6

Polycarbonate composites were prepared by melt-mixing resin (Mobay Merlon M50) and lubricant (the polytetrafluoroethylene lubricant used was LNP TL-156; the polyethylene was cryogenically ground ARCO Dylan 2010F) in an extruder. Samples were prepared and tested on the thrust washer test apparatus described in Example 1, but test conditions were changed to 1.2 psi and 50 fpm (0.136 bar, 15.2 m/min), and the test material was run against a polybutylene terephthalate (Valox 325) mating surface.

Polymer-polymer mated surfaces are known to generate catastrophic wear conditions. Polytetrafluoroethylene lubricant is commonly used to reduce wear rates in these instances. It was demonstrated that a lubricant blend of polytetrafluoroethylene and polyethylene provides significantly greater reductions in mating plastic wear than polytetrafluoroethylene lubricant alone, as shown below:

| | Wear factor of mating PBT wear washer $10^{-10}\dfrac{in^3min}{ft.lb.hr.}$ $\left[\dfrac{cm^3min}{m.Kg.hr}\right]$ |
|---|---|
| Bisphenol-A Polycarbonate with 10% Polytetrafluoroethylene Lubricant | 134 $[1.59 \times 10^{-6}]$ |
| Bisphenol-A Polycarbonate with 6% Polytetrafluoroethylene and 4% Polyethylene Lubricant | 93 $[1.10 \times 10^{-6}]$ |

Example 7

Limiting pressure velocity (LPV) is generated in a Faville-LeValley LFW5 test apparatus. A cylindrical journal bearing sample typically 3/4″ ID×3/4″ long×1/16″ wall, (19×19×1.6 mm), is installed in an anti-friction bearing mounted in the test apparatus. The anti-friction bearing holder is equipped with a torque arm. Load is applied through the anti-friction bearing to the test bearing. The shaft was rotated at the two test velocities of 100 fpm and 800 fpm (30.5, 244 m/min). At each test velocity a load-stepping test is conducted. Frictional torque and bearing temperature, which are plotted continuously, are allowed to reach equilibrium at each loading. The equilibrium condition is maintained for approximately 30 minutes, then the load is increased. At an advanced load increment, the frictional torque and/or bearing temperature will not stabilize. The increase in torque or temperature will result in bearing failure. Neat polyamide 6/6 resin (Monsanto Vydyne 21) yielded a very low value of 3,000 psi · fpm at the 100 fpm test velocity (63.1 bar · m/min at 30.5 m/min). The addition of 30% glass fiber reinforcement (PPG 3540) resulted in an increase in LPV to 12,500 psi fpm (263.1 bar · m/min).

The addition of 15% polytetrafluoroethylene lubricant (LNP TL-156) and 30% glass fiber reinforcement to the polyamide 6/6 resin results in a further increase in the limiting pressure velocity to 17,000 psi · fpm (357.8 bar · m/min) at the 100 fpm test velocity (357.8 bar · m/min).

However, the addition of 30% glass fiber reinforcement, 3% polytetrafluoroethylene and 12% polyethylene lubricant to the polyamide 6/6 resin results in a composite yielding a limiting pressure velocity of 23,000 psi · fpm at the 100 fpm test velocity (484 bar · m/min at 30.5 m/min). A large increase in limiting pressure velocity is also noted at the 800 fpm (244 m/min) test velocity. (See table below). These large increases in limiting pressure velocity demonstrate the usefulness of this lubricant blend as an additive in plastic materials for bearing applications.

7

**0 124 955**

| | Limiting pressure velocity (LPV) (psi · fpm) [bar · m/min] | |
|---|---|---|
| | 100 fpm (30.5 m/min) | 800 fpm (244 m/min) |
| Polyamide 6/6 Resin | 3,000 [63.1] | 2,500 [52.6] |
| Polyamide 6/6 Resin with Glass Fiber Reinforcement | 12,500 [263.1] | 8,000 [168.4] |
| Polyamide 6/6 Resin with 30% Glass Fiber Reinforcement and 15% Polytetrafluoroethylene Lubricant | 17,000 [357.8] | 13,000 [273.6] |
| Polyamide 6/6 Resin with 30% Glass Fiber Reinforcement and 3% Polytetrafluoroethylene and 12% Polyethylene Lubricant | 23,000 [484] | 21,000 [442] |

The words listed below are understood to be commercial names and/or Registered Trade Marks:

Microthene
ARCO Dylark
ARCO Dylan
Celanese
Celcon
Phillips Ryton
Mobay Merlon
Valox
Monsanto
Vydyne

**Claims**

1. Use of a composition for providing desirable friction and wear properties to a polymer matrix material, said composition comprising a blend of about 2 to 98 weight percent polyolefin having an average molecular weight of about 50,000 to about 500,000, and about 98 to 2 weight percent finely divided polytetrafluoroethylene.

2. Use of a composition according to claim 1, wherein said polyolefin and said polytetrafluoroethylene are cryogenically milled and blended.

3. A polymer composite having desirable friction and wear properties comprising a polymer matrix and about 1 to 30 weight percent, for example 15 to 20 weight percent based on the weight of the composite, of a lubricant mixed with said polymer matrix, said lubricant comprising a polyolefin having an average molecular weight of about 50,000 to 500,000 and which does not remain as discrete, identifiable particles after melt mixing with the polymer matrix.

4. A polymer composite according to claim 3, wherein said lubricant comprises a blend of about 2 to 98 weight percent of said polyolefin and about 98 to 2 weight percent finely divided polytetrafluoroethylene.

5. A composition according to claim 1 or claim 2, or a polymer composite according to claim 3 or claim 4, wherein said polyolefin is selected from polyethylene, polypropylene and an ethylenepropylene copolymer.

6. A composition according to claim 1 or claim 2, or a polymer composite according to claim 3 or claim 4, wherein said polyolefin is polyethylene having an average molecular weight of less than about 500,000.

7. A composition according to claim 1 or claim 2, or a polymer composite according to claim 3 or claim 4, wherein said polytetrafluoroethylene has an average molecular weight of less than about 4,000,000.

8. A polymer composite according to claim 3 or claim 4, wherein said blend comprises about 20 to 80 weight percent polyolefin and about 80 to 20 weight percent finely divided polytetrafluoroethylene.

9. A polymer composite according to claim 3 or claim 4, wherein said polyolefin and said polytetrafluoroethylene are blended prior to incorporation into the polymer matrix.

10. A polymer composite according to claim 3 or claim 4, wherein said polymer matrix is selected from thermoplastic polymers, thermosetting polymers, rubbers, and elastomers.

11. A polymer composite according to claim 3 or claim 4, wherein said polymer matrix is selected from thermosetting polyesters, thermosetting polyimides, phenolic, epoxy, urea, melamine and furan resins.

12. A polymer composite according to claim 3 or claim 4 wherein said polymer matrix is selected from:

(a) a thermoplastic polymer selected from polyamides, polyesters, polyoxymethylene, polyphenylene sulfide, aromatic carbonate polymer, styrenic polymers and copolymers, polyolefins and polyurethanes, and blends thereof;

(b) a polyamide selected from polyhexamethylene adipamide, polyhexamethylene sebacamide, polycaprolactam, polycapryllactam, polyhexamethylene dodecanamide, polyhexamethyl azeleamide, polyundecanoamide, polylauryllactam, polyamide modified with carboxylic acids and olefin copolymer, and blends of the above polyamides;

(c) a polyester selected from polyalkylene terephthalates, polyalkylene terephthalate copolymers of the polyether-ester type, and mixtures thereof;

(d) a polyoxymethylene homopolymer or copolymer;

(e) an aromatic carbonate polymer in which the polycarbonate resin is based on Bisphenol-A and phosgene;

(f) a styrenic polymer or copolymer selected from the polystyrene, poly-α-methyl styrene, acrylonitrile-butadiene-styrene, styrene-butadiene styrene, acrylonitrile-styrene, styrene-maleic anhydride, styrene-maleic anhydride-methacrylate, and styrenic alloys with poly-2,6-dimethyl-1,4-phenylene ether and blends thereof;

(g) a polyolefin of a different type than the polyolefin which comprises the lubricant, said polyolefin matrix being selected from polyethylene, polypropylene and polyolefin copolymers, and blends thereof; and

(h) a linear thermoplastic polyurethane.

13. A polymer composite according to claim 3 or claim 4 or any claim dependent thereon, wherein said polymer composite also contains a filler and/or a reinforcing agent.

**Patentansprüche**

1. Verwendung einer Zusammensetzung zur Schaffung erwünschter Reibungs- und Verschleißeigenschaften bei einem polymeren Matixmaterial, wobei die Zusammensetzung ein Gemisch von etwa 2 bis 98 Gew.% Polyolefin mit einem mittlerem Molekulargewicht von etwa 50,000 bis etwa 500,000 und etwa 98 bis 2 Gew.% feinverteiltes Polytetrafluoräthylen umfaßt.

2. Verwendung einer Zusammensetzung nach Anspruch 1, bei der das Polyolefin und das Polytetrafluoräthylen kryogenisch gemahlen und gemischt sind.

3. Polymerzusammensetzung mit erwünschten Reibungs- und Verschleißeigenschaften, bestehend aus einer Polymermatrix und etwa 1 bis 30 Gew.%, zum Beispiel 15 bis 20 Gew.% auf der Basis des Gewichts der Zusammensetzung, eines mit der Polymermatrix gemischten Gleitmittels, wobei das Gleitmittel ein Polyolefin mit einem mittleren Molekulargewicht von etwa 50,000 bis 500,000 umfaßt, das nach Schmelzmischung mit der Polymermatrix nicht als einzelne, identifizierbare Partikel verbleibt.

4. Polymerzusammensetzung nach Anspruch 3, bei der das Gleitmittel aus einem Gemisch von etwa 2 bis 98 Gew.% des Polyolefins und etwa 98 bis 2 Gew.% feinverteilten Polytetrafluoräthylens besteht.

5. Zusammensetzung nach Anspruch 1 oder 2 oder Polymerzusammensetzung nach Anspruch 3 oder 4, bei der das Polyolefin aus Polyäthylen, Polypropylen und einem Äthylenpropylen-Copolymer ausgewählt ist.

6. Zusammensetzung nach Anspruch 1 oder Anspruch 2 oder Polymerzusammensetzung nach Anspruch 3 oder Anspruch 4, bei der das Polyolefin ein Polyäthylen mit einem mittleren Molekulargewicht von weniger als etwa 500,000 ist.

7. Zusammensetzung nach Anspruch 1 oder Anspruch 2, oder Polymerzusammensetzung nach Anspruch 3 oder Anspruch 4, bei der das Polytetrafluoräthylen ein mittleres Molekulargewicht von weniger als etwa 4,000,000 hat.

8. Polymerzusammensetzung nach Anspruch 3 oder Anspruch 4, bei der das Gemisch etwa 20 bis 80 Gew.% Polyolefin und etwa 80 bis 20 Gew.% feinverteiltes Polytetrafluoräthylen umfaßt.

9. Polymerzusammensetzung nach Anspruch 3 oder Anspruch 4, bei der das Polyolefin und das Polytetrafluoräthylen vor der Einbeziehung in die Polymermatrix gemischt sind.

10. Polymerzusammensetzung nach Anspruch 3 oder Anspruch 4, bei der die Polymermatrix aus thermoplastischen Polymeren, thermohärtenden Polymeren, Gummimaterialien und Elastomeren ausgewählt ist.

11. Polymerzusammensetzung nach Anspruch 3 oder Anspruch 4, bei der die Polymermatrix aus thermohärtenden Polyestern, thermohärtenden Polyimiden, Phenol-, Epoxid-, Harnstoff-, Melamin- und Furanharzen ausgewählt ist.

12. Polymerzusammensetzung nach Anspruch 3 oder Anspruch 4, bei der die Polymermatrix ausgewählt ist aus:

(a) einem thermoplastischen Polymeren, ausgewählt aus Polyamiden, Polyestern, Polyoxymethylen, Polyphenylensulfid, aromatischem Karbonatpolymer, Styrol-Polymeren und -Copolymeren, Polyolefinen und Polyurethanen sowie deren Mischungen;

(b) einem Polyamid, ausgewählt aus Polyhexamethylen-Adipinsäureamid, Polyhexamethylen-Sebazinamid, Polykaprolactam, Polykaprylactam, Polyhexamethylen-Dodecanamid, Polyhexamethyl-Azelamid, Polyundecanamid, Polylauryllactam, mit Karbonsäuren und Olefincopolymeren modifiziertem Polyamid sowie Mischungen der obigen Polyamide;

(c) einem Polyester, ausgewählt aus Polyalkylenterephthalaten, Polyalkylentherephthalat-Copolymeren des Polyäther-Ester-Typs sowie deren Mischungen;

(d) einem Polyoxymethylen-Homopolymer oder -Copolymer;

(e) einem aromatischem Karbonatpolymer, in dem das Poly-Karbonatharz auf Bisphenol-A und Phosgen basiert;

(f) einem Styrol-Polymer oder -Copolymer, ausgewählt aus dem Polystyrol, Poly-α-Methyl-Styrol, Acrylnitril-Styrol, Styrol-Malein-Anhydrid, Styrol-Malein-Anhydrid-Methacrylat, und Styrollegierungen mit Poly-2,6-Dimethyl-1,4-Phenylen-Äther und deren Mischungen;

(g) einem Polyolefin eines von dem das Gleitmittel umfassenden Polyolefin unterschiedlichen Typs, wobei die Polyolefinmatrix aus Polyäthylen, Polypropylen und Polyolefincopolymeren sowie deren Mischungen ausgewählt ist; und

(h) einem linearen thermoplastischen Polyurethan.

13. Polymerzusammensetzung nach Anspruch 3 oder Anspruch 4 oder einem auf diese zurückbezogenen Anspruch, bei dem die Polymerzusammensetzung außerdem ein Füllmittel und/oder ein Verstärkungsmittel enthält.

**Revendications**

1. Utilisation d'une composition destinée à fournir des propriétés de friction et d'usure désirables à un matériau d'une matrice en polymère, cette composition comprenant en mélange d'environ 2 à 98% en poids d'une polyoléfine ayant un poids moléculaire moyen allant d'environ 50 000 environ 500 000 et d'environ 98 à 2% en poids de polytétrafluoroéthylène finement divisé.

2. Utilisation d'une composition suivant la revendication 1 caractérisée en ce que la polyoléfine et le polytétrafluoroéthylène sont broyés et mélangés cryogéniquement.

3. Composite en polymère ayant des propriétés de friction et d'usure désirables, comprenant une matrice en polymère et environ de 1 à 30% en poids, par exemple de 15 à 20% en poids, par rapport au poids du composite, d'un lubrifiant mélangé avec la matrice en polymère, ce lubrifiant comprenant une polyoléfine ayant un poids moléculaire moyen d'environ 50 000 à environ 500 000 et qui ne subsiste pas en tant que particules discrètes identifiables, après mélangeage à l'état fondu avec la matrice en polymère.

4. Composite en polymère suivant la revendication 3 caractérisé en ce que le lubrifiant est constitué, par un mélange d'environ 2 à 98% en poids de polyoléfine et d'environ 98 à 2% en poids de polytétrafluoroéthylène finement divisé.

5. Composition suivant l'une quelconque des revendications 1 ou 2 ou composite en polymère suivant l'une quelconque des revendications 3 ou 4 caractérisé en ce que la polyoléfine est choisie parmi le polyéthylène, le polypropylène et un copolymère éthylène-propylène.

6. Composition suivant l'une quelconque des revendications 1 ou 2 ou composite en polymère suivant l'une quelconque des revendications 3 ou 4 caractérisé en ce que le polyoléfine est un polyéthylène ayant un poids moléculaire moyen inférieur à environ 500 000.

7. Composition suivant l'une quelconque des revendications 1 ou 2 ou composite en polymère suivant l'une quelconque des revendications 3 ou 4 caractérisé en ce que le polytrétafluoroéthylène a un poids moléculaire moyen inférieur à environ 4 000 000.

8. Composite en polymère suivant l'une quelconque des revendications 3 ou 4 caractérisé en ce que le mélange comprend environ 20 à 80% en poids de polyoléfine et environ 80 à 20% en poids de polytétrafluoroéthylène finement divisé.

9. Composite en polymère suivant l'une quelconque des revendications 3 ou 4 caractérisé en ce que la polyolefine et le polytétrafluoroéthylène sont mélangés avant leur incorporation dans la matrice en polymère.

10. Composite en polymère suivant l'une quelconque des revendications 3 ou 4 caractérisé en ce que la matrice en polymère est choisie parmi les polymères thermoplastiques, les polymères thermodurcissables, les caoutchoucs et les élastomères.

11. Composite en polymère suivant l'une quelconque des revendications 3 ou 4 caractérisé en ce que la matrice en polymère est choisie parmi les polyesters thermodurcissables, les polyimides termodurcissables, les résines phénoliques, époxy, urée, mélamine et furaniques.

12. Composite en polymère suivant l'une quelconque des revendications 3 ou 4 caractérisé en ce que la matrice en polymère est choisie parmi:

a) un polymère thermoplastique choisi par les polyamides, les polyesters, le polyoxyméthylène, le sulfure de polyphénylène, un polymère de carbonate aromatique, les polymères et copolymères styréniques, les polyoléfines et les polyuréthanes, ainsi que leurs mélanges;

b) un polyamide choisi parmi le polyhexaméthylène adipamide, le polyhexaméthylène sébacamide, le polycaprolactame, le polycapryllactame, le polyhexaméthylène dodécanamide, le polyhexaméthyl azéléamide, le polyundécanoamide, le polylauryllactame, un polyamide modifié avec un copolymère d'acides carboxyliques et d'une oléfine, ainsi que les mélanges des polyamides précités;

c) un polyester choisi parmi les polyalkylène téréphtalates, les copolymères de polyalkylène téréphtalate du type polyether-ester ainsi que leurs mélanges;

d) un homopolymère ou copolymère du polyoxyméthylène;

e) un polymère de carbonate aromatique dans lequel la résine du polycarbonate est basée sur le bisphénol-A et le phosgéne;

f) un polymère ou copolymère styrénique choisi parmi le polystyrène le poly-α-méthyl styrène, l'acrylonitrile-butadiène-styrène, styrène-butadiène styrène, l'acrylonitrile-styrène, le styrène-anhydride maléïque, le styrène-anhydridemaléique-méthacrylate, et les alliages styrèniques avec le poly-2,6-diméthyl-1-4 phénylène éther ainsi que leurs mélanges;

g) une polyoléfine d'un type différent de la polyoléfine constituant le lubrifiant, cette matrice de polyoléfine étant choisie parmi le polyéthylène, le polypropylène et copolymères de polyoléfines, ainsi que leurs mélanges; et

h) un polyuréthane termoplastique linéaire.

13. Composite en polymère suivant l'une quelconque des revendications 3 ou 4 caractérisé en ce que le composite en polymère contient également une charge et/ou un agent de renforcement.